# EUROPEAN PATENT APPLICATION

(11) **EP 0 757 327 A2**
(43) Date of publication of application: **05.02.1997**
(21) Application number: 96305596.7
(22) Date of filing: 30.07.1996
(51) Int. Cl.: G06K 11/18

(54) **Mouse enclosure**

(30) Priority: 31.07.1995 US 509153
(71) Applicant: KEY TRONIC CORPORATION, Spokane, WA 99214 (US)
(72) Inventor: Fauble, Charles L., Newman Lake, WA 99205 (US); Ohm, Patrick, Lexington, KY 40514 (US); Griffin, John C., Las Cruces, NM 88011 (US)
(74) Representative: Pratt, David Martin

(57) **Abstract**

An enclosure for a mouse including a housing for enclosing the mouse, and interchangeable actuator button assemblies which are releasably engageable with the housing and which have predetermined button arrangements.

## Description

### Technical Field

The present invention relates to a mouse enclosure, and more specifically to a mouse enclosure which includes a plurality of interchangeable actuator button assemblies which are releasably engageable with the housing and which have predetermined button arrangements.

### Background Art

A mouse is a peripheral device used in combination with personal computers, and which controls cursor movement on an associated video screen. A mouse is employed on a passive surface, such as a desk top, with motion of the mouse producing a corresponding motion of a cursor on the video screen. There are various types of mice available. For example, mechanical and optical mice are well known. In this regard, two generally recognized types of mechanical mice are available. The first type of mechanical mouse is comprised generally of a housing supported for rolling motion by two wheels. In particular, the wheels are oriented perpendicular with respect to each other and are positioned in rolling engagement with the passive surface. A second type of mechanical mouse mounts a sphere which rolls on the passive surface and further includes wheels which are driven by the sphere. The wheels include transducers which are associated therewith and which provide electrical signals indicative of the motion of the mouse in two axes.

While the operation of conventionally designed mice has generally been satisfactory, several shortcomings have detracted from their usefulness. More specifically, manufacturers of mice have traditionally manufactured one style of mouse, that is a mouse which has been designed with a right-handed operator in mind. In this regard, many of the commercially available mice are of a right-handed, two-key configuration. In particular, the two-key configuration includes a primary, first or pick button which is the largest of the two-key combination. The pick button normally includes finger identifiable indicia which can be detected by the sense of touch of the operator. Further, the two-key combination includes a second button which is oriented in juxtaposed relation relative to the first button, and which is normally of reduced dimensions in relative comparison to the first, primary or pick button. As should be understood, software supplied by the manufacturer allows an operator to program both the primary and secondary buttons for various operations, thereby permitting a left-hand operator, for example, to reprogram the respective buttons to accommodate left-handed usage. Of course, when a right-handed mouse is employed by the left-handed operator and is subsequently reprogrammed for left-handed operation, the operator would thereafter utilize the smaller of the two buttons for most operations. This is, of course, inconvenient in view of the relative size of the smaller button in comparison to the larger button which is normally employed by right-handed operators. As should be understood, this button arrangement often results in errors in view of the likelihood that an operator, by accident or oversight, may accidentally engage the larger button in view of its size and position relative to the much smaller button, which is now employed as the primary or pick button.

In addition to the above-identified shortcoming, many software applications can now utilize a mouse which has a three-key combination. Such is the case with programs which are utilized for computer-assisted design. When software is employed which requires a three-keyswitch mouse, it has normally been the case that a computer operator will purchase a three-keyswitch mouse and then, as conditions warrant, substitute the three-keyswitch mouse in place of the two-keyswitch mouse for specific applications, or further, just entirely replace the two-keyswitch mouse. Under these circumstances, the computer operator would incur the additional cost of purchasing the new mouse, and further would need to adjust their techniques for utilizing the new mouse in view of the distinctive keyswitch combination which employs substantially smaller keys than a two-keyswitch combination.

Therefore, it has long been known that it would be desirable to have a mouse enclosure which would provide operator flexibility with regard to left-handed and right-handed operation, and which further would facilitate the use of same for software applications which employ a three-keyswitch combination.

### Brief Description of the Drawings

Preferred embodiments of the invention are described below with reference to the accompanying drawings, which are briefly described below.

Fig. 1 is a perspective, environmental view of an assembled mouse enclosure of the present invention.

Fig. 2 is an exploded, perspective, environmental view of a mouse enclosure of the present invention.

Fig. 3 is a top, plan view of a two-button, interchangeable actuator button assembly for use by right-handed operators.

Fig. 4 is a top, plan view of a three-button, interchangeable actuator button assembly.

Fig. 5 is a top, plan view of a two-button, interchangeable actuator button assembly which is utilized by left-handed operators.

Fig. 6 is a greatly enlarged, longitudinal, vertical sectional view taken from a position along line 6-6 of Fig. 1.

### Best Modes for Carrying Out the Invention and Disclosure of Invention

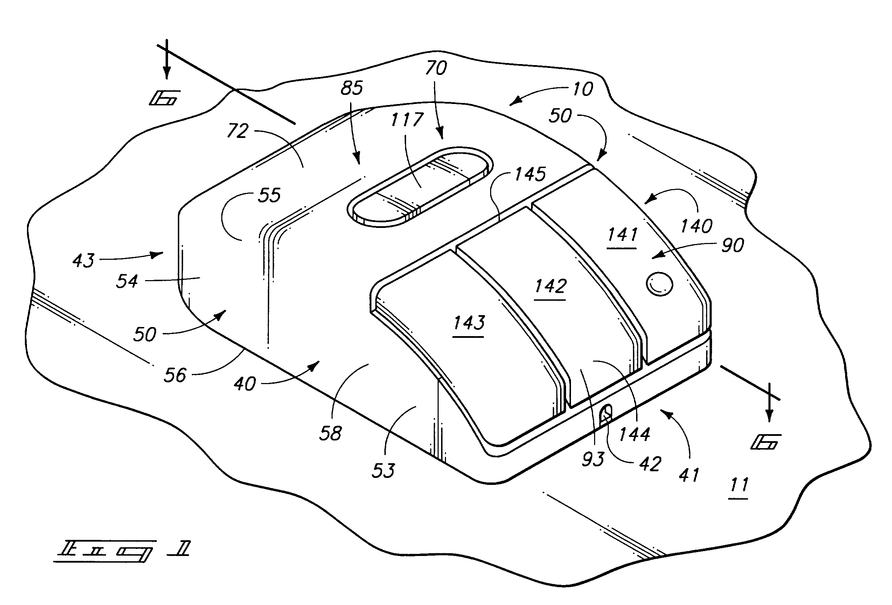

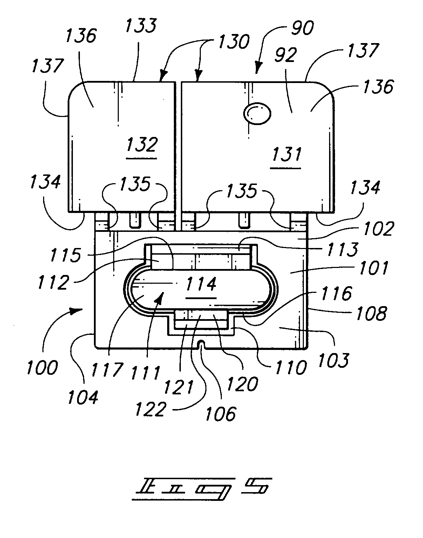

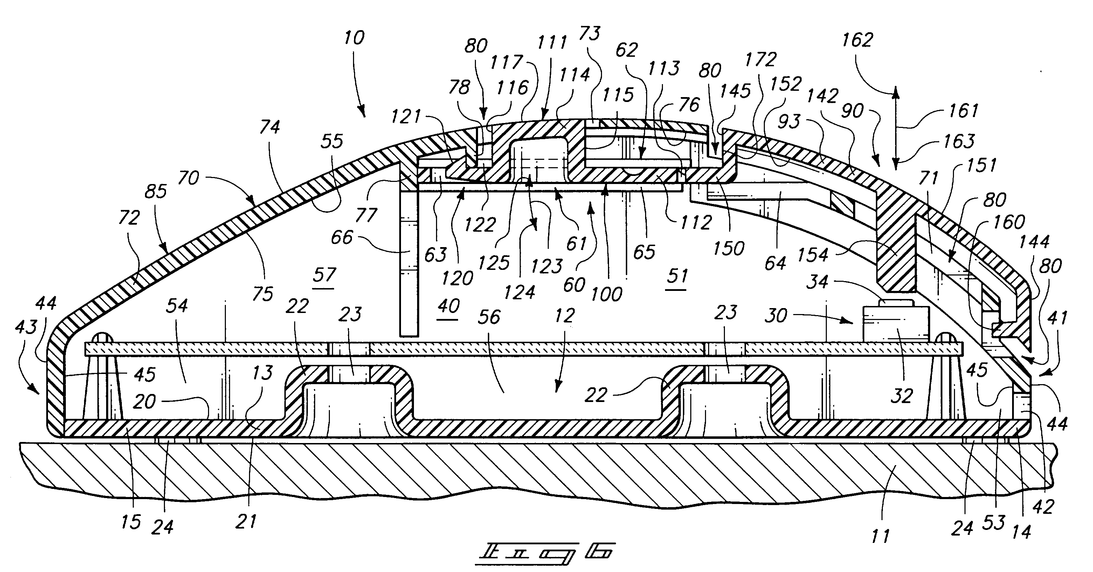

With reference to the drawings, a mouse enclosure in accordance with the present invention, is generally indicated by the numeral 10 in Fig. 1. As shown therein, the mouse enclosure is operable for movement by an operator (not shown) across a passive surface, such as a desk or other supporting surface 11. As best seen in Fig. 6, the mouse enclosure 10 has a base member which is generally indicated by the numeral 12, and which includes a substantially planar main body 13, which has a first end 14, and an opposite, second end 15. The main body also includes a top surface 20 and an opposite, bottom surface 21. Positioned substantially along the longitudinal axis of the main body is a pair of wheel enclosures 22. Each wheel enclosure includes an aperture 23. It should be understood that the wheel enclosures are operable to mount individual wheels which translate motion along the X and Y axes to accompanying devices which are mounted within the mouse enclosure 10 (not shown). The bottom surface 21 further includes individual landing members 24 which rest on the supporting surface 11.

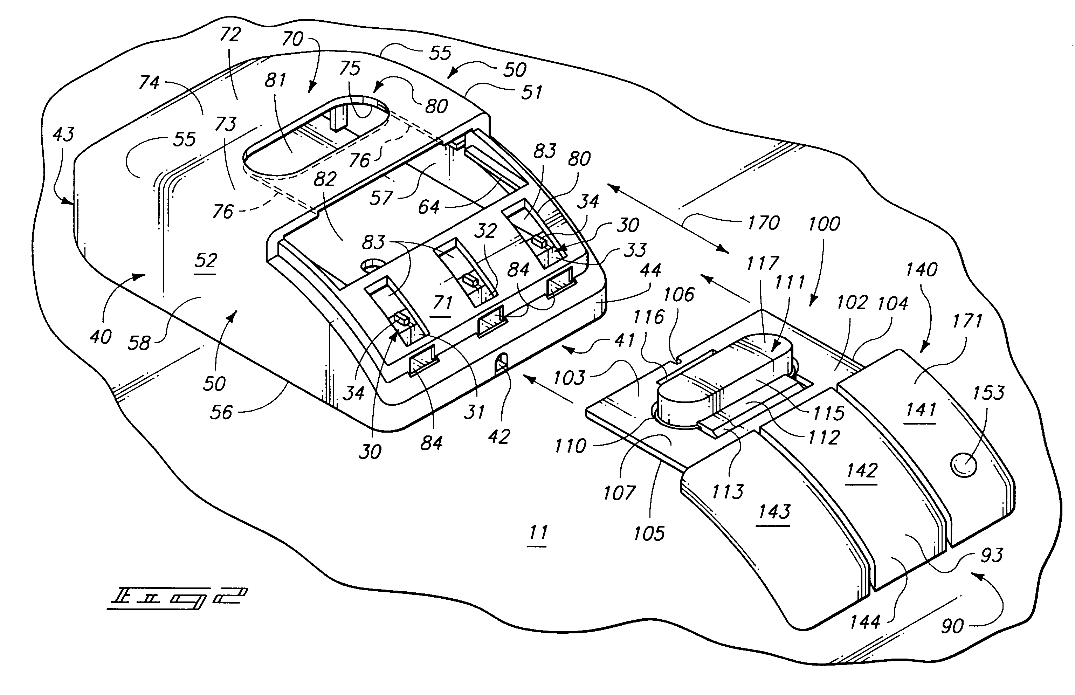

As best seen by reference to Figs. 2 and 6, a plurality of switches, hereinafter designated as first, second and third switches 31, 32, and 33, respectively, are positioned using conventional fastening techniques in spaced relation relative to the top surface 20 of the base member 12. Each of the switches is of conventional design, and has a movable switch member 34 which is made integral therewith. The mouse enclosure 10 further includes a substantially continuous sidewall 40 which is oriented in substantial normal relation relative to the base member 12, and which matingly cooperates therewith. The continuous sidewall has a forward portion 41, and which further defines an electrical conduit aperture 42. In addition, the continuous sidewall 40 includes a rearward portion 43. The individual forward and rearward portions have respective exterior facing surfaces 44, and opposite, interior facing surfaces 45. In addition, the continuous sidewall includes a pair of sidewalls 50, and which are designated as a left or first sidewall portion 51 and a right, or second sidewall portion 52. The individual sidewall portions are disposed in substantially parallel, spaced relation one-to-the-other. Each of the left and right sidewall portions has a forward end 53, and an opposite, rearward end 54. Still further, the left and right sidewall portions further have top peripheral edges 55 and opposite bottom peripheral edges 56 which matingly cooperate with the base member 12. The left and right sidewall portions each also includes an interior facing surface 57 and an opposite exterior facing surface 58.

The mouse enclosure 10 has two guide portions or assemblies 60 which are made integral with the inside facing surface 57. Each of the guide portions or assemblies includes a first guide member 61 and a second guide member 62, which is disposed in predetermined substantially parallel spaced relation relative to one another. The first and second guide members define a space or guide passageway 63. Further, the first guide member has a first portion 64, and a second portion 65 which is oriented in substantially the same plane as the first portion. A reinforcement rib 66 is made integral with each of the left and right sidewall portions 51 and 52, respectively.

As best seen by reference to Figs. 2 and 6, the mouse enclosure 10 of the present invention includes a top portion 70 which is made integral with the respective continuous sidewall 40 as defined by the forward portion 41; rearward portion 43; and pair of sidewalls 50, respectively. The top portion 70 of the enclosure 10 has a forward end or section 71; an opposite, rearward end or section 72; and an intermediate section generally indicated by the numeral 73. The top portion also includes an exterior facing surface 74 and an opposite interior facing surface 75. As best seen in Fig. 2, a channel 76 is formed in the inside surface and has a predetermined length and width dimension. Still further, a centering and movement protrusion 77 is made integral with inside surface and is oriented substantially along the longitudinal axis of the enclosure. In addition, a locking member 78 is made integral with the inside surface 75.

As illustrated most clearly by reference to Fig. 2, the top portion 70 includes a plurality of apertures which are designated by the numeral 80 and which are oriented in predetermined positions relative to base member 12. More specifically, the top portion includes a first or locking aperture 81; a second, or button aperture 82; a third, plurality of switch apertures 83; and a fourth, plurality of motion-limiting apertures 84. As will be seen in the drawings, the individual switch apertures 83 are oriented in substantial alignment with the respective electrical switches 30. Further, the individual, fourth, or motion-limiting apertures 84 are oriented in substantial alignment with the respective switch apertures 83. The significance of these features will be discussed in greater detail hereinafter. The continuous sidewall 40, and top portion 70 define a housing 85 which encloses the electronic controls of the mouse (not shown).

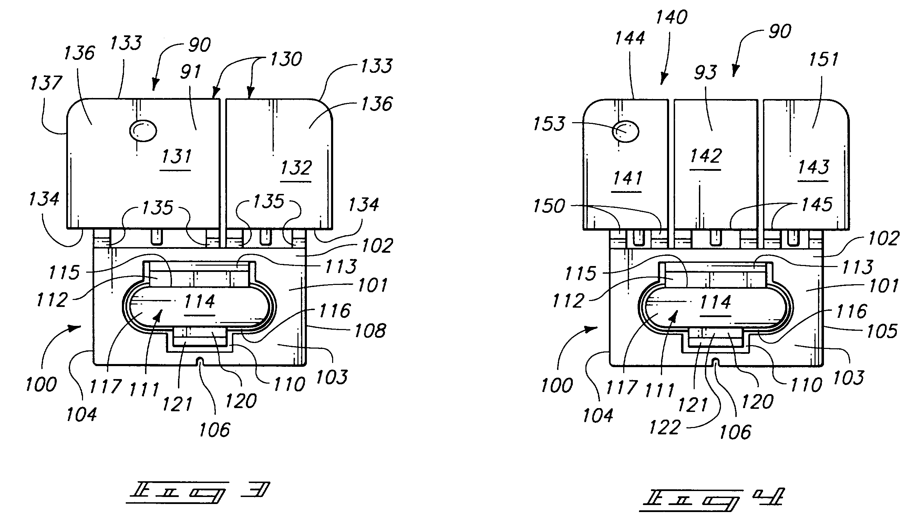

As best illustrated by a study of Figs. 2, 3, 4, and 5, the mouse enclosure 10 includes a plurality of interchangeable actuator button assemblies 90. In this regard, the interchangeable actuator button assemblies or mouse button assemblies include in a first form 91 (Fig. 3) a two-button combination for use by right-handed computer operators; a second form 92 (Fig. 5) which includes a two-button combination which is employed by left-handed computer operators; and a third form 93 (Fig. 4) which includes a three-button combination with may be used by either left-handed or right-handed operators depending upon the programming of the software employed with the mouse.

As best understood by a study of Figs. 2, 3, 4, and 5, respectively, the individual interchangeable actuator button assemblies 90 each includes a coupler which is generally indicated by the numeral 100. The coupler has a main body 101 which has a forward or first end 102, and an opposite, second, or rearward end 103. Additionally, each main body has a left lateral edge 104, and a right lateral edge 105. It should be understood that the length dimension of the coupler assembly is less than the length dimension of the second or button aperture 82. This dimensional relationship facilitates the slidable mating receipt of the coupler in the respective guide passages 63, which is defined by the first and second guide members 61 and 62, respectively. This is best understood by a study of Figs. 2 and 6, respectively. As best seen by reference to the top plan views of Figs. 3, 4, and 5, an orientation slot 106 is formed in the rearward end 103 of the main body, and thereby provides a means for matingly receiving the movement limiting protrusion 77, which is fixed on the inside surface 75 of the top portion 70. As best illustrated by reference to Fig. 6, the orientation slot provides a convenient means for centering the main body 101 relative to the second, or button aperture 82, and further provides a means for limiting rearward motion of the main body along the respective guide passageways 63.

As best understood by a study of Figs. 3, 4, and 5, an aperture of predetermined dimensions 110 is formed substantially centrally of the main body 101. This aperture 110 defines a locking detent which is generally designated by the numeral 111. The aperture further defines a hinge 112, which includes a channel or otherwise attenuated or weakened portion 113. The hinge 112 provides a convenient means by which the locking detent may move along a substantially arcuately shaped path of travel when force is applied to same. Located substantially centrally of the aperture 110 is the main detent body 114 which includes a forward edge 115 which is made integral with the hinge 112, and a rearward edge 116. Still further, the detent body includes a top surface 117 which may be engaged by the finger of a computer operator (not shown), and which may cause it to distort or otherwise move along its respective path of travel. The top surface 117 has a length dimension which is less than the length dimension of the channel 76 which is formed in the top portion 70. As best illustrated by reference to Fig. 6, a locking tab 120 is made integral with the rearward edge 116. The locking tab has a camming surface 121. Still further, a gap 122 is defined between the locking tab, and the rearward edge 116. The gap has predetermined dimensions which will permit it to matingly engage the locking member 78. As noted above, the detent body 114 is movable along a path of travel 123 from a disengaged position 124, wherein the locking tab 120 is displaced from the gap 122, to an engaged position 125, wherein the locking member 78 and the locking tab 120 are positioned in interfitted mating relation. This is shown most clearly by reference to Fig. 6.

As best seen by reference to Figs. 3 and 5, the first and second forms 91 and 92, of the interchangeable actuator button assemblies 90 each has a pair of buttons which are designated generally by the numeral 130. The buttons include a first, primary or pick button 131 which has predetermined dimensions; and a second button 132 which is disposed in juxtaposed, spaced relation relative thereto. The second button has predetermined dimensions which are less than that of the primary button. The first and second buttons 131 and 132, respectively, each has a forward edge 133, and an opposite, rearward edge 134. Further, a pair of hinge members 135 movably mount the individual first and second buttons on the first, or forward end 102 of the coupler 100. In addition, each of the buttons has a top or exterior facing surface 136, and an opposite interior facing surface 137. As will be recognized from a study of Figs. 3 and 5, the first and second forms of the interchangeable actuator button assemblies 91 and 92, respectively, are essentially mirror images of each other; that is, what is shown in Fig. 3 would be employed for right-handed operators, and that which is shown in Fig. 5 would be utilized by left-handed operators.

As best illustrated by reference to Figs. 2 and 4, the third form 93 of the interchangeable actuator button assemblies 90 includes three buttons which are generally designated by the numeral 140, and which include a primary, first, or pick button 141; a second button 142; and a third button 143. Each of the buttons has a forward edge 144, and an opposite, rearward edge 145. Additionally, a pair of hinges 150 mounts each of the respective buttons 141, 142, and 143, respectively, on the forward end 102 of the coupler 100. In addition to the foregoing, each of the buttons 140 includes an exterior facing surface 151, and an opposite, interior facing surface 152. As illustrated most clearly in Fig. 4, a depression 153 is formed in the primary button 141, and provides a convenient means by which an operator may identify the button by sense of feel. As best seen by reference to Fig. 6, a switch engagement member 154 is mounted on the interior facing surface of the respective keys of all forms, and as such, is operable to move through the respective switch apertures 83 and into force transmitting relation relative to the individual switches 30 when force is applied by the operator to the exterior facing surface 151. Still further, individual motion limiting members 160 are mounted on the inside facing surface 152 at the forward edge 144 of the individual buttons 141, 142, and 143, respectively. The motion limiting members are operable to be received in the respective motion limiting apertures 84, thereby defining a path of movement 161 between a first position 162, and a second position 163. As should be understood, the motion limiting members are employed on all forms of the interchangeable actuator button assemblies.

The interchangeable actuator button assemblies 90 are movable along a predetermined, substantially linear path of travel 170 from a first, non-operational position 171, as shown in Fig. 2, whereby the individual actuator button assemblies are disposed in spaced relation relative to the enclosure 10; to a second, engaged position 172 as shown in Fig. 6. In this regard, the coupler 100 is oriented in substantial alignment relative to the respective guide portions 60, such that it may slide into mating receipt in the respective guide passageways 63. As the respective interchangeable actuator button assembly 90 moves along the path of travel 170, the locking detent 111 comes into contact with the intermediate section 73 of the enclosure 10. When this event occurs, the operator would apply force to the locking detent 111, thereby urging it along the path of travel 123. This permits the detent body 114 to pass underneath the intermediate portion, and proceed rearwardly relative to the enclosure 10 and in slidable mating receipt in the channel 76. As force continues to be applied to the interchangeable actuator button assembly 90, the detent body 114 moves into substantial alignment relative to the locking aperture 81, and thereafter moves along the path of travel 123, and into mating receipt therewith in the action of a snap-fit. Simultaneously with the movement of the detent body 114 into the locking aperture, the camming surface 121 of the locking tab 120 engages, distorts, and passes by the locking member 78. When this motion is completed, the motion limiting members 160 will be oriented in the individual motion limiting apertures 82, and the individual switch engagement members 154 will be substantially coaxially oriented relative to each of the switch engagement apertures 83 thereby permitting movement through same. To disengage the interchangeable actuator button assembly, force would be applied to detent body 114, thereby urging it along its respective path of travel 123, and moving it into a disengaged position 124. When this event occurs, force applied to the individual buttons 140 would cause the interchangeable actuator button assembly to move along the path of travel 170 from the second operational position, to the first non-operational position as shown in Fig. 2.

### Operation

The operation of the described embodiments of the present invention are believed to be readily apparent and are briefly summarized at this point.

As best seen by reference to Fig. 2, the mouse enclosure 10 of the present invention includes a housing 85 for enclosing the mouse; and a plurality of interchangeable actuator button assemblies 90 which are releasably engageable with the housing, and which have predetermined button arrangements. More particularly, the enclosure for the mouse includes a base member 12, having a top and an opposite bottom surface 20 and 21, respectively, and wherein three switches 31, 32, and 33 are mounted in predetermined positions relative to the top surface. A continuous sidewall 40, and an associated top portion 70 matingly engages the base member. Further, the housing 85 defines individual locking, button and switch apertures 81, 82 and 83, respectively, and which are positioned in predetermined orientations relative to the base member. As best seen by reference to Fig. 2, the individual switch apertures are substantially aligned with the respective switches.

The plurality of interchangeable actuator button assemblies 90, each has a coupler 100 which is slidably received in the button aperture 82, and which further is matingly received in the locking aperture 81. The respective actuator button assemblies also have individual switch engagement members 154, which are disposed in a given orientation such that upon depression of the actuator button assembly, the individual engagement members move through the respective switch apertures 83, and forcibly engage the individual switches 30.

As seen most clearly by reference to Figs. 3, 4, and 5, each of the interchangeable actuator button assemblies 90 includes a locking assembly in the form of locking tab 120, and a locking detent 111; and a plurality of buttons which are movably borne by the locking assembly. In this regard, the interchangeable actuator button assembly 90 includes a first form 91, having a two-button arrangement which is for right-handed usage; a second form 92, which is a two-button arrangement for left-handed usage; and a third form 93, including a three-button arrangement which may be used by either left or right-handed individuals.

It will be seen, therefore, that the mouse enclosure 10 of the present invention provides a convenient means whereby an operator can readily remove a given interchangeable actuator button assembly and replace it with an actuator button assembly arrangement which is appropriate for specific operational circumstances, or operator preferences. Further, the present invention obviates the need for purchasing a new mouse in the event that operational requirements or software usage dictates the use of a mouse having a three-key arrangement.

Therefore, the mouse enclosure 10 of the present invention can be used in a wide variety of operational environments, is of moderate cost to manufacture and maintain, is inexpensive to employ, and further is highly efficient in operation and reduces to an absolute minimum the various problems associated with the prior art devices which have been utilized for substantially identical purposes heretofore.

## Claims

1. An enclosure for a mouse, comprising:
a housing for enclosing the mouse; and
interchangeable actuator button assemblies which are releasably engageable with the housing and which have predetermined button arrangements.

2. An enclosure as claimed in claim 1, and wherein the interchangeable actuator button assemblies include a two-button left-handed arrangement, a two-button right-handed arrangement, and a three-button arrangement.

3. An enclosure as claimed in claim 1, and wherein the interchangeable actuator button assemblies include a two-button left-handed arrangement, a two-button right-handed arrangement, and a three-button arrangement;
wherein the housing has a base member which mates with the housing; and
wherein a plurality of switches are borne by the base member and are disposed in force receiving relation relative to the respective actuator button assemblies.

4. An enclosure as claimed in claim 1, and wherein the interchangeable actuator button assemblies include a two-button left-handed arrangement, a two-button right-handed arrangement, and a three-button arrangement;
wherein the housing has a base member which mates with the housing;
wherein a plurality of switches are borne by the base member and are disposed in force receiving relation relative to the respective actuator button assemblies; and
wherein the housing further defines individual locking, button, switch, and motion limiting apertures which are positioned in predetermined orientations relative to the base member, and wherein the individual switch apertures are substantially aligned with the respective switches.

5. An enclosure as claimed in claim 1, and wherein the interchangeable actuator button assemblies include a two-button left-handed arrangement, a two-button right-handed arrangement, and a three-button arrangement;
wherein the housing has a base member which mates with the housing;
wherein a plurality of switches are borne by the base member and are disposed in force receiving relation relative to the respective actuator button assemblies;
wherein the housing further defines individual locking, button, switch, and motion limiting apertures which are positioned in predetermined orientations relative to the base member, and wherein the individual switch apertures are substantially aligned with the respective switches;
wherein the respective actuator button assemblies each has a coupler which is slidably received in the button aperture and which is guided along a predetermined path of travel by the housing from a first, non-operational position, to a second, operational position; and
wherein a locking detent is made integral with each coupler and is matingly received in the locking aperture.

6. An enclosure as claimed in claim 1, and wherein the interchangeable actuator button assemblies include a two-button left-handed arrangement, a two-button right-handed arrangement, and a three-button arrangement;
wherein the housing has a base member which mates with the housing;
wherein a plurality of switches are borne by the base member and are disposed in force receiving relation relative to the respective actuator button assemblies;
wherein the housing further defines individual locking, button, switch, and motion limiting apertures which are positioned in predetermined orientations relative to the base member, and wherein the individual switch apertures are substantially aligned with the respective switches;
wherein the respective actuator button assemblies each has a coupler which is slidably received in the button aperture and which is guided along a predetermined path of travel, by the housing from a first, non-operational position, to a second operational position;
wherein a locking detent is made integral with each coupler and is matingly received in the locking aperture; and
wherein the respective actuator button assemblies include a member which is received in the respective movement limiting apertures, and which limits the range of motion of the individual buttons relative to the individual switches.

7. An enclosure as claimed in claim 1, and wherein the interchangeable actuator button assemblies include a two-button left-handed arrangement, a two-button right-handed arrangement, and a three-button arrangement;
wherein the housing has a base member which mates with the housing;
wherein a plurality of switches are borne by the base member and are disposed in force receiving relation relative to the respective actuator button assemblies;
wherein the housing further defines individual locking, button, switch, and motion limiting apertures which are positioned in predetermined orientations relative to the base member, and wherein the individual switch apertures are substantially aligned with the respective switches;
wherein the respective actuator button assemblies each has a coupler which is slidably received in the button aperture and which is guided along a predetermined path of travel, by the housing from a first non-operational position, to a second operational position;
wherein a locking detent is made integral with each coupler and is matingly received in the locking aperture;
wherein the respective actuator button assemblies include a member which is received in the respective movement limiting apertures, and which defines the range of motion of the individual buttons relative to the individual switches; and
wherein the housing further includes a locking member, and the locking detent includes a locking tab which releasably engages the locking member thereby positioning the respective actuator button assemblies in an appropriate, releasably fixed orientation relative to the individual switches, when the respective actuator button assemblies are located in the second operational position.

8. An enclosure for a mouse comprising:
a base member having a top and bottom surface;
three switches mounted in predetermined positions on the top surface;
a housing matingly borne by the base member, and having a top surface, and a sidewall which is made integral therewith, and wherein the housing defines individual locking, button and switch apertures which are positioned in predetermined orientations relative to the base member, and wherein the individual switch apertures are substantially aligned with the respective switches; and
a plurality of interchangeable actuator button assemblies each having a coupler which is slidably received in the button aperture and which is matingly received in the locking aperture, and wherein the respective actuator button assemblies each has individual switch engagement members which are disposed in a given orientation such that upon depression of the actuator button assembly the individual engagement members move through the individual switch apertures and forcibly engage the individual switches.

9. An enclosure as claimed in claim 8, and wherein a guide assembly is borne by the respective sidewalls and is operable to slidably receive the coupler, and wherein the housing further includes a locking tab engagement member which is mounted on the interior facing surface of the top surface and which cooperates with the coupler, and wherein the housing further defines a motion limiting aperture, and the actuator button assembly includes a motion limiting member which is received in the motion limiting aperture and which defines the range of movement of the actuator button assembly when it is depressed.

10. An enclosure as claimed in claim 9, and wherein the coupler has a guide member which slidably cooperates with the respective guide assembly, and wherein the coupler further includes a locking detent which is operable to be matingly received in the locking aperture in the manner of a snap-fit.

11. An enclosure as claimed in claim 10, and wherein the individual actuator button assemblies include a plurality of buttons which are operable to forcibly engage the respective switches, and wherein the respective buttons are affixed on the coupler in a predetermined pattern and are movable relative thereto.

12. An enclosure as claimed in claim 11, and wherein the respective actuator button assemblies include a two-button right-handed arrangement, a two-button left-handed arrangement, and a three-button arrangement.

13. A mouse button assembly comprising:
a locking assembly; and
a plurality of buttons movably borne by the locking assembly.

14. A mouse button assembly as claimed in claim 13, and wherein the plurality of buttons includes a first button having predetermined dimensions; and a second button having predetermined dimensions which are less than the first button.

15. A mouse button assembly as claimed in claim 14, and wherein the first and second buttons are disposed in juxtaposed, spaced relationship one to the other, and wherein the respective button order may be reversed.

16. A mouse button assembly as claimed in claim 15, and wherein the mouse button order includes a first form which facilitates right-handed manipulation, and a second form which facilitates left-handed manipulation.

17. A mouse button assembly as claimed in claim 16, and wherein the locking assembly releasably engages a housing, and wherein the housing encloses a plurality of switches which are oriented in force receiving relation relative to the respective first and second buttons.

18. A mouse button assembly as claimed in claim 13, and wherein the plurality of buttons include first, second and third buttons which have substantially equal dimensions and which are oriented in substantially juxtaposed spaced relation one-to-each-other.

19. A mouse button assembly as claimed in claim 18, and wherein the locking assembly releasably engages a housing and wherein the housing encloses a plurality of switches which are oriented in force receiving relation relative to the respective first, second, and third buttons.
